## Europäisches Patentamt

## European Patent Office

## Office européen des brevets

(19)

(11) Numéro de publication: **0 109 315**
**B1**

(12) # FASCICULE DE BREVET EUROPÉEN

(45) Date de publication du fascicule du brevet:
**23.09.87**

(51) Int. Cl.⁴: **G 05 D 1/06**

(21) Numéro de dépôt: **83401678.4**

(22) Date de dépôt: **18.08.83**

(54) Procédé et dispositif de pilotage d'un aérodyne dans le plan vertical.

(30) Priorité: **18.08.82 FR 8214303**

(43) Date de publication de la demande:
**23.05.84 Bulletin 84/21**

(45) Mention de la délivrance du brevet:
**23.09.87 Bulletin 87/39**

(84) Etats contractants désignés:
**BE CH DE GB IT LI NL SE**

(56) Documents cité:
**FR-A-2 316 647**

(73) Titulaire: **SOCIETE FRANCAISE D'EQUIPEMENTS POUR LA NAVIGATION AERIENNE (S.F.E.N.A.), B.P. 59 Aérodrome de Villacoublay/ F-78140 Velizy Villacoublay (FR)**

(72) Inventeur: **Bayet, Michel, 23, rue des Ormeaux, F-92260 Fontenay- Aux- Roses (FR)**
Inventeur: **Lebrun, Jean- Louis, 21, Avenue Jeanne d'Arc, F-92160 Antony (FR)**

(74) Mandataire: **Jolly, Jean- Pierre, Cabinet BROT et JOLLY 83, rue d'Amsterdam, F-75008 Paris (FR)**

EP 0 109 315 B1

## Description

La présente invention concerne un procédé et un dispositif de pilotage d'un aérodyne dans le plan vertical, permettant la capture et le maintien d'une vitesse sélectée, de telle manière que, durant la capture de vitesse, l'altitude soit une fonction monotone (vitesse verticale monosigne), cette monotonie devant être respectée, en particulier dans les deux manoeuvres critiques suivantes:

- la capture d'une vitesse plus grande en montée, qui ne doit donner lieu à aucune phase transitoire de descente;

- la capture d'une vitesse plus petite en descente, qui ne doit donner lieu à aucune phase transitoire de montée.

L'invention s'applique notamment, mais non exclusivement, au contrôle des évolutions d'altitude et de vitesse indiquée IAS, selon le mode généralement appelé "mode Level Change" qui active, après l'affichage d'une vitesse et d'une altitude de consigne:

a) la capture de la vitesse sélectée,

b) l'acquisition de l'altitude sélectée. D'une manière générale, on sait qu'une façon d'éviter une phase transitoire de montée ou de descente pendans la capture de vitesse est de contrôler les variations d'énergie potentielle. L'avion possède, à chaque instant, une pente totale qu'il convient de répartir au mieux entre une variation d'énergie cinétique représentative de l'accélération (ou de décélération) sur la trajectoire et une variation d'énergie potentielle représentative des variations de pente.

Le contrôle du partage des variations d'énergie potentielle et cinétique peut être effectué par une loi du type de celle décrite dans le brevet FR 2 316 647, déposé au nom de la Demanderesse et concernant un procédé et un système de pilotage utilisant l'énergie totale.

Ce procédé consiste essentiellement à asservir la pente aérodynamique $\gamma_a$ de l'aérodyne à une pente demandée $\gamma_d$, qui est elle-même la pente totale $\gamma_t$ modulée par l'écart de la vitesse aérodynamique V, par rapport à une vitesse de consigne $V_2$, et à afficher, par exemple, à l'aide de la barre de tendance de tangage d'un horizon directeur de vol, le signal d'erreurs $\delta$ entre la pente aérodynamique $\gamma_a$ et la pente demandée $\gamma_d$, ou à piloter l'avion à travers un système automatique.

Cette loi permet d'assurer la capture d'une vitesse sélectée IAS avec contrôle de l'accélération ou de la décélération à des valeurs préaffichées par un limiteur d'écart de vitesse, et la tenue de la vitesse sélectée IAS, ce limiteur d'écart étant lui-même modulé par la valeur de la pente totale $\gamma_t$.

Toutefois, un préaffichage de l'accélération ou de la décélération ne garantit pas la monotonie de l'altitude suivant le niveau de poussée affiché de l'aérodyne.

L'invention a donc pour but un perfectionnement permettant de limiter la pente demandée $\gamma_d$ en fonction du signe de l'écart d'altitude $\Delta Z$ entre l'altitude actuelle Zact de l'aérodyne et une altitude demandée Zsel, de telle sorte que cette limite (lim ($\Delta Z$)) ne laisse passer que les ordres $\gamma_d$ positifs, si l'altitude sélectée est plus grande que l'altitude actuelle et les ordres $\gamma_d$ négatifs, dans l'hypothèse inverse.

Le dispositif de pilotage selon l'invention fait donc intervenir;

- un sommateur destiné à élaborer un signal représentatif de la somme de la pente totale $\gamma^*_t$ et d'un signal d'écart de vitesse $\Delta IAS$ limité au moyen d'un limiteur à limite variable en fonction de la fraction de la pente totale $\gamma_t$ destinée à faire accélérer ou décélérer l'aérodyne.

- un soustracteur recevant le signal fourni par ledit sommateur, éventuellement limité par un limiteur à limite variable en fonction de l'écart d'altitude Zsel et l'altitude Zact de l'aérodyne, ledit soustracteur recevant également un signal représentatif de la pente aérodynamique $\gamma_a$ de l'aérodyne, et

- un circuit de traitement du signal délivré par le soustracteur, ce circuit pouvant comprendre un limiteur à limite variable en fonction de la vitesse de l'aérodyne exprimée en Mach, un amplificateur suiveur et un filtre par exemple de fonction de transfert $\frac{1}{1+Ts}$ qui délivre un signal de commande représentatif d'un écart d'assiette longitudinale $-\Delta\theta_c$.

On notera que le signal de commande représentatif de l'ecart d'assiette longitudinale de l'aérodyne $-\Delta\theta_c$ peut être transmis à la grande boucle d'asservissement des commandes de pilotage de l'aérodyne ou même à un directeur de vol.

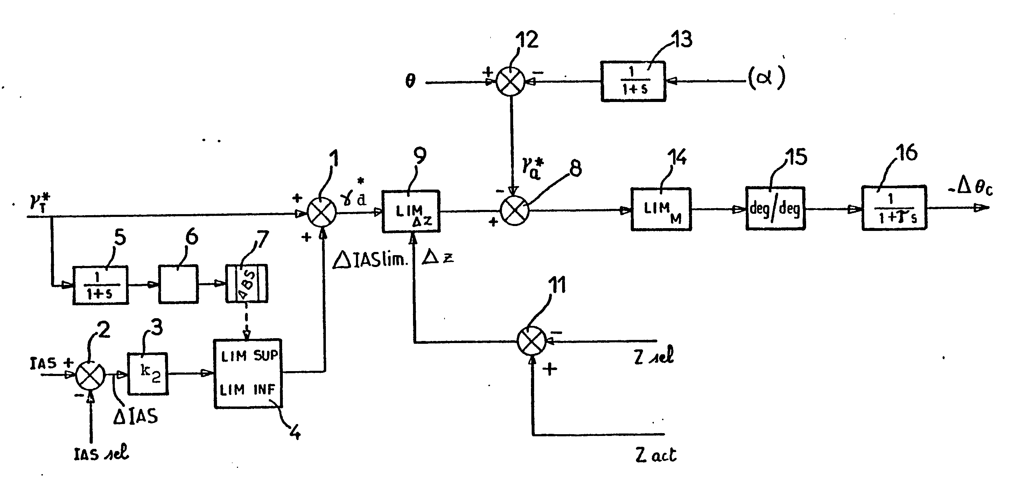

Un mode de réalisation de l'invention sera décrit ci-après, à titre d'exemple non limitatif, avec référence au dessin annexé dans lequel:

- La figure unique est un schéma de principe d'un dispositif de pilotage selon l'invention.

Avec référence à la figure unique, le dispositif de pilotage comprend tout d'abord un circuit permettant d'obtenir un signal $\gamma^*_t$ représentatif de la somme de la pense totale $\gamma_t$ de l'aérodyne et de l'écart $\Delta IAS$ entre la vitesse IAS sélectée et la vitesse IAS actuelle, cet écart $\Delta IAS$ étant limité en fonction de la pente totale $\gamma^*_t$ destinée à faire accélérer ou décélérer l'aérodyne.

Ce circuit se compose d'un additionneur 1 qui reçoit d'une part le signal de pente totale $\gamma^*_t$ et d'autre part le signal $\Delta IAS$ limité provenant d'un circuit comprenant un ensemble soustracteur 2 effectuant le calcul de l'écart $\Delta IAS$, un amplificateur 3 de gain k2 et un limiteur 4 piloté par un circuit de commande comprenant, en série, un filtre 5, un amplificateur 6 et un circuit de valeur absolue 7 de la valeur filtrée et amplifiée de la pente totale $\gamma^*_t$.

On notera que le signal $\gamma^*_t$ qui intervient dans ce circuit représente la pente que devrait prendre l'aérodyne pour maintenir sa vitesse constante en vol rectiligne, et qui a pour expression:

$$\gamma^*_t = \tfrac{1}{g}\left(ax_1 + az_1 \tfrac{\alpha}{1+s}\right)$$

2

dans laquelle:

α est l'incidence de l'aérodyne,

$ax_1$ est l'accélération sur l'axe de roulis,

$az_1$ est l'accélération sur l'axe de lacet,

g est l'accélération de la pesanteur,

s est l'opérateur de Laplace.

La mesure de la pente totale $\gamma^*_t$ peut être faite dans un calculateur, à partir de l'incidence vraie α et d'un boîtier accélérométrique comprenant au moins deux accéléromètres dont les axes sensibles sont respectivement parallèles à l'axe de roulis (détection $ax_1$) et à l'axe de lacet (détection $az_1$).

Le signal fourni par l'additionneur 1 est transmis à un soustracteur 8 par l'intermédiaire d'un limiteur 9 à limite variable en fonction de l'écart entre l'altitude sélectée Zsel et l'altitude actuelle de l'aérodyne, cet écart étant obtenu au moyen d'un soustracteur 11 qui reçoit un signal représentatif des altitudes Zsel et Zact.

Le soustracteur 8 reçoit en outre nn signal $\gamma^*_a$ obtenu au moyen d'un circuit comprenant un soustracteur 12 recevant un signal d'écart de l'assiette longitudinale θ et un signal représentatif de l'incidence de l'aérodyne filtré au moyen d'un filtre l3.

Le signal fourni par le soustracteur est ensuite traité par un limiteur 14, à limite variable en fonction de la vitesse de l'aérodyne (exprimée en Mach), par un amplificateur suiveur 15 et un filtre 16 qui fournit un signal représentatif d'une assiette longitudinale de commande-$\Delta\theta_c$.

Ce signal-$\Delta\Theta_c$ a donc pour expression:

$$-\Delta\Theta_c = \left\{\left[\gamma^*_t + \left[k_2 \cdot \Delta IAS\right] \text{Lim} \begin{matrix} \text{Sup} \\ \text{Inf} \end{matrix}\right] \text{Lim} \Delta z - \gamma_a\right\} \text{Lim} M \frac{1}{1 + \tau s}$$

Le fonctionnement des limiteurs 4 et 9, à limites supérieure et inférieure variables, doit permettre de couvrir les six configurations suivantes, qui correspondent à la valeur de la vitesse IAS sélectée par rapport à la vitesse (IAS) engagement et de la valeur de l'altitude sélectée Z sélec par rapport à l'altitude actuelle Zact:

- a. 1)     <u>Montée en accélération</u>

    (IAS sélec) > (IAS) actuelle

    altitude Z sélec > altitude Z actuelle

L'objectif : avoir une accélération limitée pour ne pas descendre, se traduit par : borne à piquer de la limite :

    Lim Inf = - 0,5 x $|\gamma^*_t|$

La borne à cabrer doit permettre une autorité suffisante pour capturer la vitesse sélectée :

    Lim sup = + 4°, et

    Lim Z inférieure = 0 degré

    Lim Z supérieur = 20 degrés

-a.2)     <u>Montée à vitesse constante</u>

    (IAS) sélec = (IAS) actuelle

    Altitude Z sélec > altitude Z act

L'objectif de ne pas descendre se traduira par Lim Z supérieure positive et par:

    Lim Inf = - 0,5 x $|\gamma^*_t|$, et

    Lim Sup = + 4°

- a.3)     <u>Montée en décélération</u>

    (IAS) sélec < (IAS) act

    Altitude Z sélec > altitude Z actuelle

Cas trivial : les autorités en écart de vitesse sont fixes.

    Lim Inf = - 4°

    Lim Sup = + 4°, et

    Lim Z Sup = 20°

    Lim Z Inf = 0°

- b.1)     <u>Descente en accélération</u>

    (IAS) sélec > (IAS) act

    Altitude Z sélec < altitude Z actuelle

Cas trivial, dual de a.3 :

    Lim Inf = - 4°

    Lim Sup = + 4°, et

    Lim Z Sup = 0°

    Lim Z Inf = - 20°

- b.2)     <u>Descente à vitesse constante</u>

    (IAS) sélec = (IAS) act

    Altitude Z sélec < altitude Z act

Cas dual de a.2 :
On prendra :

$$\text{Lim Inf} = -4°$$
$$\text{Lim Sup} = 0{,}5 \, |\gamma^*_t|, \text{ et}$$
$$\text{Lim Z Sup} = 0°$$
$$\text{Lim Z Inf} = -20°$$

- b.3) <u>Descente en décélération</u>
(IAS) sélec $<$ (IAS) act
Altitude Z sélec $<$ altitude Z act

Cas dual de a.1 :
L'objectif :- décélération limitée pour ne pas remonter - se traduit par : borne à cabrer de la limite :

$$\text{Lim Sup} = 0{,}5 \times |\gamma^*_t|$$

La borne à piquer doit permettre une autorité suffisante, pour capturer la vitesse sélectée :

$$\text{Lim Inf} = -4°$$

et de plus :

$$\text{Lim Z inférieure} = -20 \text{ degrés}$$
$$\text{Lim Z supérieur} = 0 \text{ degré}$$

Il convient de noter que grâce au limiteur 14, on obtient des ordres de changement d'assiette $-\Delta\theta_c$ compatibles avec la sécurité.


## Revendications

1. Procédé de pilotage d'un aérodyne dans le plan vertical, notamment pour la capture et le maintien d'une vitesse sélectée IASsel, et la transition vers une altitude Zsel, de telle manière que durant la capture de vitesse, l'évolution d'altitude Z de l'aérodyne soit une fonction monotone, procédé dans lequel on asservit la pente aérodynamique $\gamma a$ de l'aérodyne à une pente demandée $\gamma d$, qui est elle-même la pente totale $\gamma t$ à laquelle on a ajouté un signal d'écart $\Delta$ IAS entre la vitesse aérodynamique actuelle IAS et ladite vitesse de consigne sélectée IASsel, de manière à obtenir un signal d'erreur $-\Delta\theta c$ représentatif d'une assiette longitudinale de consigne qui peut être appliquée aux organes de commande de pilotage de l'aérodyne ou à un directeur de vol, caractérisé en ce qu'il consiste à limiter la pente demandée $\gamma d$ en fonction du signe de l'écart d'altitude $\Delta z$ entre l'altitude actuelle Zact de l'aérodyne et ladite altitude sélectée Zsel, de telle sorte que cette limite (Lim $\Delta z$)) ne laisse passer que les ordres $\gamma d$ positifs, si l'altitude sélectée est plus grande que l'altitude actuelle et les ordres $\gamma d$ négatifs, dans l'hypothèse inverse.

2. Dispositif de pilotage pour la mise en oeuvre du procédé selon la revendication 1, caractérisé en ce qu'il comprend:
- un sommateur 1 destiné à élaborer un signal $\gamma^*_d$ égal à la somme du signal $\gamma^*_t$ représentatif de la pente totale $\gamma_t$ et d'un signal d'écart de vitesse $\Delta$ IAS limité au moyen d'un limiteur à limite variable 4 en fonction de la pente totale $\gamma_t$;
- un soustracteur 8 recevant le signal fourni par ledit sommateur 1, limité par un limiteur 9 à limite variable en fonction de l'écart d'altitude Zsel et l'altitude actuelle Zact de l'aérodyne, ledit soustracteur 8 recevant également un signal $\gamma^*_a$ représentatif de la pente aérodynamique $\gamma_a$ de l'aérodyne, et
- un circuit de traitement du signal délivré par le soustracteur 8, ce circuit pouvant comprendre un limiteur 14 à limite variable en fonction de la vitesse de l'aérodyne exprimée en Mach, un amplificateur suiveur 15 et un filtre 16, par exemple de fonction de transfert $\frac{1}{1+Ts}$ qui délivre ledit signal de commande représentatif d'un écart d'assiette longitudinale $-\Delta\theta c$.

3) Dispositif selon la revendication 2, caractérisé en ce que le signal $\gamma^*_a$ représentatif de la pente $\gamma_a$ est obtenu au moyen d'un circuit comprenant un soustracteur 12 recevant un signal représentatif de l'assiette longitudinale $\theta$ de l'aérodyne et un signal représentatif de l'incidence $\alpha$ filtrée au moyen d'un filtre 13 de fonction de transfert de type $\frac{1}{1+s}$.

4. Dispositif selon l'une des revendications 2, 3, caractérisé en ce que le signal d'écart de vitesse $\Delta$IAS est délivré par un soustracteur 2, recevant les signaux représentatifs de la vitesse sélectée IAS sel et de la vitesse actuelle IAS, et est transmis à un amplificateur 3.

5. Dispositif selon l'une des revendications 2, 3 et 4, caractérisé en ce que la commande du susdit limiteur 4 s'effectue au moyen d'un circuit recevant le signal $\gamma^*_t$ representatif de pente totale $\gamma_t$ et qui comprend, en série, un filtre 5, de préférence, de fonction de transfert $\frac{1}{1+s}$, un amplificateur 6 et un circuit de calcul 7 effectuant la valeur absolue sortant de l'amplificateur 6.

**Patentansprüche**

1. Verfahren zur Steuerung eines Luftfahrzeugs in einer Vertikalebene, insbesondere zur Erreichung und Aufrechterhaltung einer vorherbestimmten Geschwindigkeit ($IAS_{sel}$) sowie zur Überführung auf eine vorherbestimmte Flughöhe ($Z_{sel}$), wobei die Veränderung der Flughöhe (Z) des Luftfahrzeugs während des Übergangs zu der vorherbestimmten Geschwindigkeit ($IAS_{sel}$) gleichförmig erfolgt, wobei die aerodynamische Neigung ($\gamma_a$) des Luftfahrzeugs entsprechend einer geforderten Neigung ($\gamma_d$) gesteuert wird, wobei der Wert der geforderten Neigung ($\gamma_d$) einem, um den Differenzbetrag zwischen dem Wert der tatsächlichen aerodynamischen Geschwindigkeit (IAS) und dem Wert der genannten vorherbestimmten Geschwindigkeit ($IAS_{sel}$) ergänzten Wert entspricht, so daß sich in Abhängigkeit von einem Sollwert des Trimmwinkels zwischen der Längsachse des Luftfahrzeugs und der Waagerechten ein Abweichungssignal ($-\Delta\theta_c$) ergibt, welches den Steuerungseinrichtungen des Luftfahrzeugs oder einem Flugregler zugeführt wird, dadurch gekennzeichnet, daß die geforderte Neigung ($\gamma_d$) entsprechend dem Vorzeichen der Abweichung der tatsächlichen Flughöhe ($Z_{act}$) des Luftfahrzeugs von der genannten vorherbestimmten Flughöhe ($Z_{sel}$) begrenzt wird und zwar derart, daß aufgrund dieser Begrenzung ($Lim(\Delta Z)$) positive Werte ($\gamma_d$) übertragen werden, wenn die orherbestimmte Flughöhe ($Z_{sel}$) größer ist als die tatsächliche Flughöhe ($Z_{act}$) und negative Werte ($\gamma_d$) dann übertragen werden, wenn die vorherbestimmte Flughöhe ($Z_{sel}$) kleiner ist als die tatsächliche Flughöhe ($Z_{act}$).

2. Vorrichtung zur Durchführung des Verfahrens nach Anspruch 1, gekennzeichnet durch einen Summierpunkt (1) an welchem ein, der Summe der Werte der Signale ($\gamma^*_t$) der Gesamtneigung ($\gamma_t$) und eines Abweichungssignals ($\Delta IAS$), welch letzteres mittels einer Begrenzungseinrichtung (4) begrenzt ist, deren Begrenzung in Abhängigkeit von der Gesamtneigung ($\gamma_t$) variierbar ist, entsprechender Wert ($\gamma^*_d$) gebildet wird, einen Subtrahierpunkt (8), dem das durch eine Begrenzungseinrichtung (9) begrenzte Ausgangssignal des Summierpunktes (1) zugeführt wird, wobei die Begrenzung der Begrenzungseinrichtung (9) in Abhängigkeit von der Abweichung zwischen der vorherbestimmten Flughöhe ($Z_{sel}$) und der tatsächlichen Flughöhe ($Z_{act}$) des Luftfahrzeugs variierbar ist und wobei dem Subtrahierpunkt (8) gleichzeitig ein der aerodynamischen Neigung ($\gamma_a$) des Luftfahrzeugs entsprechendes Signal ($\gamma^*_a$) zugeführt wird und durch einen Schaltkreis zur Verarbeitung des durch den Subtrahierpunkt (8) gelieferten Signals, wobei der Schaltkreis eine Begrenzungseinrichtung (14), einen Folgeverstärker (15) und ein Filter (16) aufweisen kann, wobei die Begrenzung der Begrenzungseinrichtung (14) in Abhängigkeit von der in Mach ausgedrückten Geschwindigkeit des Luftfahrzeugs variierbar ist und wobei das Filter (16) beispielsweise eine Übertragungsfunktion des Typs

$$\frac{1}{1+Ts}$$

aufweist und ausgangsseitig das genannte, die Trimmwinkelabweichung betreffende Signal ($-\Delta\theta_c$) liefert.

3. Vorrichtung nach Anspruch 2, dadurch gekennzeichnet, daß das der Neigung ($\gamma_a$) entsprechende Signal ($\gamma^*_a$) mittels eines, einen Subtrahierpunkt (12) aufweisenden Schaltkreises erzeugt wird, wobei dem Subtrahierpunkt (12) ein dem Trimmwinkel ($\theta$) zwischen der Längsachse des Luftfahrzeugs und der Waagerechten entsprechender Wert und ein, dem mittels eines Filters (13) gefilterten Wert des den Anstellwinkel ($\alpha$) betreffenden Signals zugeführt werden, wobei die Übertragungsfunktion des Filters (13) eine solche des Typs

$$\frac{1}{1+s}$$

ist.

4. Vorrichtung nach einem der vorangegangenen Ansprüche 2 oder 3, dadurch gekennzeichnet, daß das Geschwindigkeitsabweichungssignal ($\Delta$ IAS) in einem Subtrahierpunkt (2) gebildet wird, dem die Werte der vorherbestimmten Geschwindigkeit ($IAS_{sel}$) und der tatsächlichen Geschwindigkeit (IAS) zugeführt werden und daß das Signal ($\Delta IAS$) einem Verstärker (3) übertragen wird.

5. Vorrichtung nach einem der vorangegangenen Ansprüche 2, 3 oder 4, dadurch gekennzeichnet, daß die Steuerung der genannten Begrenzungseinrichtung (4) mittels eines Schaltkreises bewirkt wird, dem das der Gesamtneigung ($\gamma_t$) entsprechende Signal ($\gamma^*_t$) zugeführt wird und in welchem, hintereinandergeschaltet ein Filter (5), vorzugsweise ein solches mit einer Übertragangsfunktion des Typs

$$\frac{1}{1+s},$$

ein Verstärker (6) und ein Rechenkreis (7) zur Bestimmung des Absolutwertes des durch den Verstärker (6) übertragenen Signals angeordnet sind.

**Claims**

1. A process for piloting an aerodyne in the vertical plane, in particular for attaining and maintaining a selected speed IASsel, and transition towards a selected altitude Zsel, in such a way that, during the speed attainment phase, the variation in altitude Z of the aerodyne is a monotonic function, in which process the aerodynamic slope γa of the aerodyne is controlled in dependence on a called-for slope γd which is itself the

total slope γt to which has been added a difference signal ΔIAS between the actual aerodynamic speed IAS and said selected reference speed IASsel so as to produce an error signal -Δθc which is representative of a reference longitudinal attitude which can be applied to the control members for piloting the aerodyne or to a flight director, characterised in that it comprises limiting the called-for slope γd in dependence on the sign of the altitude difference Δz between the actual altitude Zact of the aerodyne and said selected altitude Zsel, such that said limit (Lim (Δ z)) allows to pass only the positive orders γd if the selected altitude is greater than the actual altitude and the negative orders γd in the opposite situation.

2. A piloting apparatus for carrying out the process according to claim 1 characterised in that it comprises:

- a summing means 1 intended to produce a signal $\gamma^*_d$ equal to the sum of the signal $\gamma^*_t$ representative of the total slope γt and a speed difference signal ΔIAS limited by means of a limiter 4 with a variable limit, in dependence on the total slope γt;

- a subtracting means 8 receiving the signal supplied by said summing means 1, limited by a limiter 9 with a variable limit in dependence on the difference in altitude Zsel and the actual altitude Zact of the aerodyne, said subtracting means 8 also receiving a signal $\gamma^*_a$ representative of the aerodynamic slope γa of the aerodyne, and

- a circuit for processing the signal delivered by the subtracting means 8, which circuit may comprise a limiter 14 with a variable limit in dependence on the speed of the aerodyne expressed in Mach, a follower amplifier 15 and a filter 16, for example with a transfer function $\frac{1}{1+Ts}$ which delivers said control signal representative of a difference in respect of longitudinal attitude -Δθc.

3. Apparatus according to claim 2 characterised in that the signal $\gamma^*_a$ representative of the slope γa is obtained by means of a circuit comprising a subtracting means 12 receiving a signal representative of the longitudinal attitude θ of the aerodyne and a signal representative of the incidence α filtered by means of a filter 13 with a transfer function of the type $\frac{1}{1+s}$.

4. Apparatus according to one of claims 2 and 3 characterised in that the speed difference signal ΔIAS is delivered by a subtracting means 2, receiving the signals representative of the selected speed IASsel and the actual speed IAS, and is transmitted to an amplifier 3.

5. Apparatus according to one of claims 2, 3 and 4 characterised in that control of said limiter 4 is effected by means of a circuit receiving the signal $\gamma^*_t$ representative of the total slope γt and which comprises, in series, a filter 5, preferably with a transfer function $\frac{1}{1+s}$, an amplifier 6 and a calculating circuit 7 for effecting the absolute value coming from the amplifier 6.

0109315